# EUROPÄISCHE PATENTANMELDUNG

(11) **EP 1 038 746 A2**
(43) Veröffentlichungstag der Anmeldung: **27.09.2000**
(21) Anmeldenummer: 00104603.6
(22) Anmeldetag: 02.03.2000
(51) Int. Cl.: B60T 11/10, B60T 11/16

(54) **Bremsvorrichtung für Fahrzeuge**

(30) Priorität: 23.03.1999 DE 19912886
(71) Anmelder: DaimlerChrysler AG, 70567 Stuttgart (DE)
(72) Erfinder: Diehl, Hermann, 81827 München (DE); Freitag, Rainer, 73277 Owen (DE); Reiger, Rupert, Dr., 85521 Ottobrunn (DE); Schopper, Michael, 70192 Stuttgart (DE)

(57) **Zusammenfassung**

Eine Bremsvorrichtung für Fahrzeuge umfassend einen Hauptbremszylinder und mit diesem über Bremsleitungen verbundene Radbremszylinder (10), eine Hydraulikflüssigkeit, mittels der die Radbremszylinder durch Betätigen des Hauptbremszylinders mit Druck beaufschlagbar sind, ist gekennzeichnet durch wenigstens eine vorzugsweise benachbart zu den Radbremszylindern angeordnete Einrichtung (20) zur nicht verschwindenden Differenzbildung der Strömungsprofile der Hin- und Rückströmung der Hydraulikflüssigkeit zur Ausbildung eines Transports der Hydraulikflüssigkeit.

## Beschreibung

Die Erfindung betrifft eine Bremsvorrichtung für Fahrzeuge nach dem Oberbegriff des Anspruchs 1.

Eine Druckmittel-Bremsanlage eines Räderfahrzeugs geht beispielsweise aus der DE 32 46 651 A1 hervor.

Diese Druckmittel-Bremsanlage weist einen Steuerzylinder, einen Bremszylinder für jedes Fahrzeugrad und eine Leitung auf, welche den Steuerzylinder mit dem Bremszylinder verbindet. In der Leitung ist zur Dämpfung des Bremsfluidstroms durch die Leitung eine Drosseleinrichtung vorgesehen, um so die Übertragung von Vibrationen, Pulsierungen oder dergleichen, die von beispielsweise nicht vollständig kreisförmigen Bremstrommeln, Bremsscheiben oder Bremsbelägen übertragen werden können, zu verhindern, oder um ein Blockieren bei einem schnellen Anziehen der Bremsen zu vermeiden.

Problematisch bei einer derartigen Bremsvorrichtung ist es, dass durch die Drosseleinrichtungen in Form von Leitungsquerschnittsverringerungen unerwünschte Strömungswiderstände im Bremssystem entstehen.

Als Hydraulikflüssigkeiten werden in derartigen Bremsvorrichtungen für Fahrzeuge hygroskopische Flüssigkeiten auf Polyglykoletherbasis eingesetzt, aufgrund deren Hygroskopizität verhindert werden soll, daß Wasserreste durch Eisbildung unterhalb des Gefrierpunkts oder Dampfblasenbildung oberhalb des Siedepunkts die Bremswirkung beeinträchtigen oder die Bremse des Fahrzeugs völlig funktionsuntüchtig machen.

Bei allen Bremsvorrichtungen für Fahrzeuge sind neben Rohren auch zu den Radbremszylindern führende Bremsschläuche vorgesehen, um eine Beweglichkeit der Bremsleitung sicherzustellen. Diese Bremsschläuche sind nun, wenn auch nur in geringem Umfang, wasserdurchlässig. Die Aufnahme von Wasser in der Bremsflüssigkeit führt zu einer Siedepunkterniedrigung der Bremsflüssigkeit, die der Hauptgrund für einen Wechsel der Bremsflüssigkeit in vorgegebenen Zeitintervallen ist. Da nun die Bremsschläuche bei den meisten Bremsvorrichtungen für Fahrzeuge in der Nähe der Radbremszylinder vorgesehen sind, tritt gerade in diesem Bereich eine Wasseraufnahme und eine dadurch bewirkte Siedepunkterniedrigung der Bremsflüssigkeit auf. Die Veränderung der Bremsflüssigkeit ist dabei im Bereich der Radbremszylinder lokalisiert, da bei jedem Bremsvorgang lediglich eine Hin- und und Rückverschiebung der Bremsflüssigkeit stattfindet und sich so nach einer Iteration (Hin- und Rückverschiebung) der ursprüngliche Zustand wieder einstellt.

Aufgabe der Erfindung ist es, eine Bremsvorrichtung für Fahrzeuge derart weiterzubilden, daß die Lokalisierung der störenden Wasseraufnahme der Hydraulik- oder Bremsflüssigkeit im Bereich der Radbremszylinder weitestgehend vermieden und damit eine Verlängerung der Wartungsintervalle für das Austauschen der Bremsflüssigkeiten erzielt wird.

Diese Aufgabe wird bei einer Bremsvorrichtung für Fahrzeuge der gattungsgemäßen Art durch die Merkmale des Anspruchs 1 gelöst und hat den Vorteil, daß durch die wenigstens eine, vorzugsweise benachbart zu den Radbremszylindern angeordnete Einrichtung zur nicht verschwindenden Differenzbildung der Strömungsprofile für die Hin- und Rückströmung der Hydraulikflüssigkeit gegebenenfalls unter Einbeziehung einer turbulenten Strömung durch einen dadurch erzielten Transport der Hydraulikflüssigkeit eine Lokalisierung von mit Wasser belasteter Hydraulikflüssigkeit und damit eine lokale Siedepunkterniedrigung der Bremsflüssigkeit im Bereich der Radbremszylinder weitestgehend vermieden wird.

Bei einer vorteilhaften Ausführungsform ist vorgesehen, dass die Einrichtung zur nicht verschwindenden Differenzbildung der Strömungsprofile der Hydraulikflüssigkeit den Radbremszylindern zugeordnete Vorkammern sind, die eine in Strömungsrichtung und/oder senkrecht zur Strömungsrichtung angeordnete Unsymmetrie aufweist. Durch diese Unsymmetrie ergeben sich unterschiedliche Strömungsprofile bei Hin- und bei Rückströmung der Hydraulikflüssigkeit und hierdurch ein nicht verschwindendes Strömungsprofil bei einer Iteration (eine Hin- und Rückströmung), das sich bei jeder weiteren Interation verstärkt.

Bei einem Ausführungsbeispiel ist die Vorkammer in Strömungsrichtung zunächst divergent und darauffolgend konvergent oder vice versa ausgebildet. Es folgt daher im strömungstechnischen Sinne einem Diffusor eine konvergente Stelle oder umgekehrt, die beide zusammen zu einer optimalen sukzessiven Ausbildung eines Strömungsprofils mit nicht verschwindender Differenzbildung der Hin- und Rückströmung führen.

Bei einer wiederum anderen Ausführungsform ist vorgesehen, daß die Vorkammer so ausgebildet ist, daß sie in Strömungsrichtung keine Hinterschnitte aufweist. Auf diese Weise wird vermieden, daß in der Vorkammer beim Befüllen Blasen verbleiben können, oder beim Entleeren des Bremssystems Flüssigkeit in der Vorkammer verbleibt.

Bei einem weiteren Ausführungsbeispiel ist vorgesehen, daß im Mantel eines Bremsschlauches wenigstens zwei elektrische Leiter angeordnet sind, die während des Entspannungsvorgangs der Radbremszylinder zur Erzeugung eines inhomogenen elektrischen Feldes im Innern des Bremsschlauchs mit einer Potentialdifferenz beaufschlagt werden. Die elektrischen Leiter können zur Steigerung des Effekts beliebig geformt werden.

Bei einer wiederum anderen Vorrichtung ist vorgesehen, daß im Inneren eines Bremsleitungsrohres ein Draht angeordnet ist, der während des Entspannungsvorgangs der Radbremszylinder zur Erzeugung eines inhomogenen elektrischen Feldes im Inneren des Bremsleitungsrohrs mit einer Potentialdifferenz zum Rohr beaufschlagt wird. Der Draht kann zur Steigerung des Effektes beliebig geformt werden oder beliebig verlegt werden wie z.B. mäandernd oder spiralförmig.

Kombiniert man in einem Fahrzeug die oben im Zusammenhang mit dem Bremsschlauch und dem Bremsleitungsrohr beschriebenen Ausführungsformen, kann ein Transport der Bremsflüssigkeit bis zum Hauptbremszylinder stattfinden. Die Bremsvorrichtung kann durch eine nicht näher beschriebene Einrichtung dort gereinigt bzw. entwässert werden.

Die nicht verschwindende Differenzbildung der Strömungsprofile gegebenenfalls unter Einbeziehung einer turbulenten Strömung auf elektromagnetischem Wege macht dabei von der Erscheinung Gebrauch, daß polarisierbare Materie bzw. Materie mit einem permanenten Dipolmoment, das heißt mit einer Dielektrizitätskonstanten größer als 1, an inhomogene elektrische Felder ankoppelt. Bremsflüssigkeiten auf Polyglykoletherbasis stellen eine derartige polarisierbare Materie dar.

Die Dielektrizitätskonstante von Bremsflüssigkeit ändert sich zwar mit dem Wassereintrag und kann sogar zur Bestimmung des Wassergehalts herangezogen werden. Diese Änderung ist aber für die Verwirbelung der Bremsflüssigkeit aufgrund inhomogener Felder nicht relevant. Zur Erzielung einer möglichst guten Verwirbelung ist es lediglich erforderlich, daß die elektrischen Felder im Bremsschlauch oder in dem Bremsleitungsrohr möglichst inhomogen gestaltet werden. Dabei werden die elektrischen Felder nur bei der Entspannung der Radbremszylinder zugeschaltet. Hierdurch wird ein gleichmäßiger Hinfluß der Bremsflüssigkeit bei der Betätigung der Bremse sowie bei eingeschalteten Feldern ein ungleichmäßiger Rückfluß erzielt. Die Fließprofile beim Hin- und Rückfluß sind auf diese Weise nicht identisch, so daß eine nicht verschwindende Differenzbildung der Strömungsprofile der Bremsflüssigkeit entsteht.

Vorzugsweise ist vorgesehen, daß der Bremsschlauch und das Bremsleitungsrohr einen kreisrunden Querschnitt aufweisen. Hierdurch wird bei einer pulsförmigen Beaufschlagung mit Druck, die mit einer Aufweitung des Bremsschlauchs bzw. des Bremsleitungrohrs verbunden ist, eine Biegebeanspruchung des Bremsschlauchs bzw. des Bremsleitungsrohrs vermieden. Bei einem kreisrunden Querschnitt entsteht im Gegensatz zu einem anderen beispielsweise elliptischen Querschnitt lediglich eine Zugbeanspruchung, jedoch keine Biegebeanspruchung, die zu einer Rißbildung und gegebenenfalls Zerstörung des Bremsschlauchs oder des Bremsleitungsrohrs führen kann.

Weitere Vorteile und Merkmale sind Gegenstand der nachfolgenden Beschreibung und der Zeichnung. In der Zeichnung zeigen:
- Fig. 1a, 1b: schematisch zwei Ausführungsbeispiele eines Radbremszylinders einer erfindungsgemäßen Bremsvorrichtung für Fahrzeuge;
- Fig. 2a - 2d: schematisch das Strömungsprofil einer Strömung mit nicht verschwindender Differenzbildung gemäß vorliegender Erfindung aufgrund einer laminaren Hinströmung und einer turbulenten Rückströmung;
- Fig. 3a, 3b: zwei unterschiedliche Ausführungsformen einer Vorkammer mit senkrecht zur Strömungsrichtung asymmetrischer Gestaltung und die darin strömende Hydraulikflüssigkeit aufgrund von laminarer Hin- und Rückströmung mit und ohne Ablösung von der Wand;
- Fig. 4: eine schaubildliche und eine Schnittansicht eines Bremsschlauchs einer anderen erfindungsgemäßen Bremsvorrichtung;
- Fig. 5: schematisch eine Schnittdarstellung einer weiteren Ausführungsform eines Bremsschlauchs einer erfindungsgemäßen Bremsvorrichtung und
- Fig. 6: schematisch eine Schnittdarstellung eines Bremsleitungsrohrs einer erfindungsgemäßen Bremsvorrichtung.

Die Erfindung basiert auf zwei Prinzipien. Zum einen kann man erreichen, daß die Strömungsprofile durch in einer Vorkammer angeordnete Diffusoren oder durch in den Bremsleitungen erzeugte inhomogene elektrische Felder, trotz laminarer Hin- und Rückströmung, bei einer Hin- und Rückströmung unterschiedlich sind und es so zu einem nicht verschwindenden Strömungsprofil und somit zum Flüssigkeitstransport kommt, zum anderen kann man durch derartige Diffusoren oder inhomogene elektrische Felder dafür sorgen, daß die Strömung zumindest in einer Flußrichtung turbulent wird und es so zusätzlich zum nicht verschwindenden Strömungsprofil zusätzlich durch Verwirbelung zu einer Durchmischung kommt. Der Fluß muß bei einem Bremsvorgang laminar bleiben, um den Fließwiderstand nicht zu erhöhen, und es ist sicherzustellen, daß eine Verwirbelung nur beim Rückfluß stattfindet. Beide Ausführungsformen sind bei Rohren sowie auch bei Schläuchen anwendbar.

Ein in Fig. 1a dargestellter Radbremszylinder 10 weist eine Vorkammer 20 mit Diffusoren auf, in die ein Bremsschlauch oder ein Bremsleitungsrohr 30 mündet.

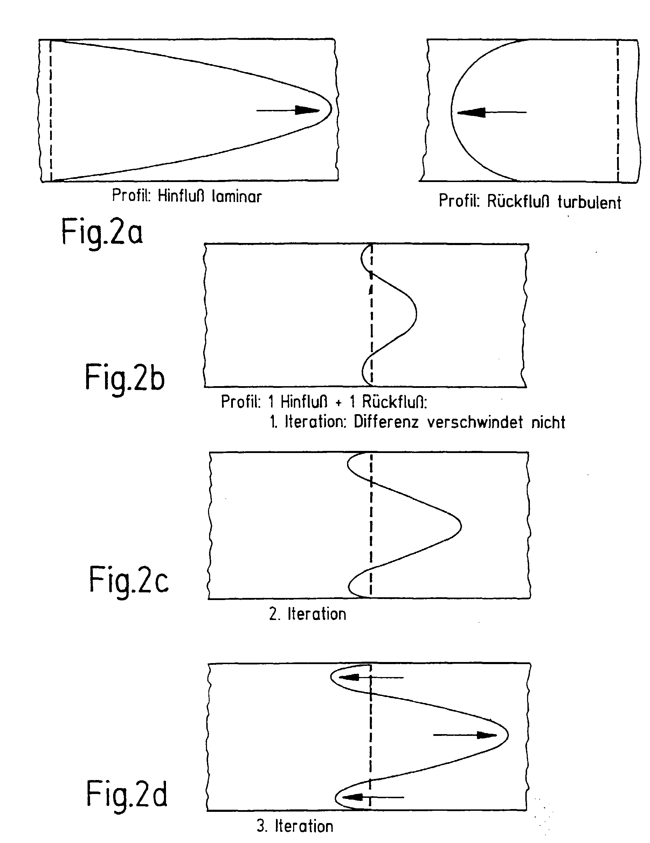

Nachfolgend wird zunächst in Verbindung mit Fig. 2a bis 2d schematisch die Ausbildung eines Strömungsprofils mit nicht verschwindender Differenzbildung erläutert.

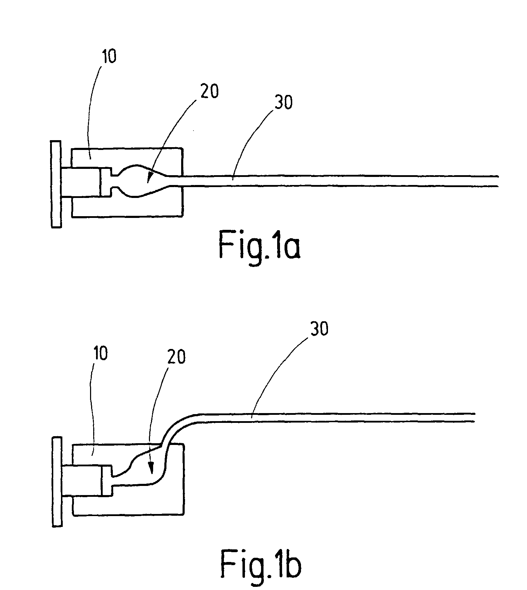

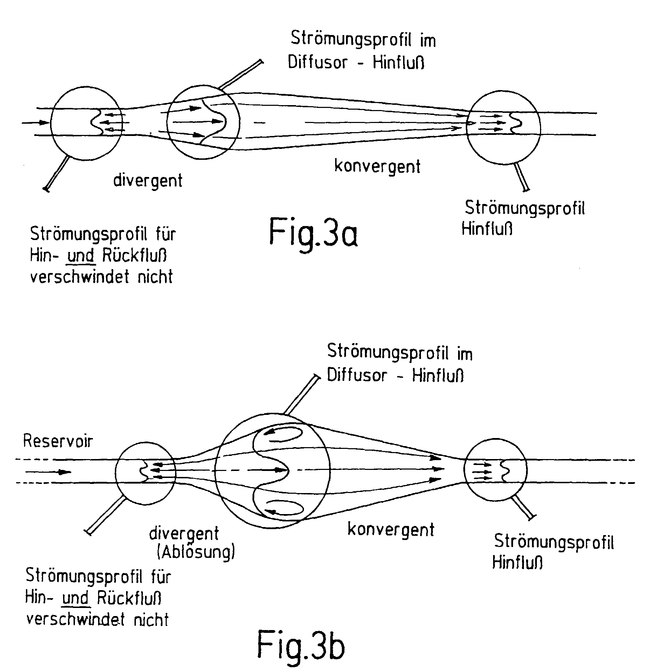

Fig. 2a zeigt schematisch zwei unterschiedliche Strömungsprofile bei Hin- und Rückfluß. In Fig. 2b ist schematisch das Strömungsprofil der Hydraulikflüssigkeit bei einer Hin- und Rückströmung, in Fig. 2c bei zwei Hin- und Rückströmungen und Fig. 2d bei drei Hin- und Rückströmungen dargestellt. Wie Fig. 2b bis 2d zeigen, bildet sich eine nicht verschwindende Differenzbildung des Strömungsprofils aus, die zu einem koaxialen Transport der Hydraulikflüssigkeit führt. Die unterschiedlichen Strömungsprofile bei Hinfluß und Rückfluß ergeben sich in Fig. 2a beispielsweise durch eine laminare Hinströmung sowie eine turbulente Rückströmung oder durch eine unsymmetrische Ausbildung der Vorkammer 20, wie es schematisch anhand der Fig. 1a, 1b, 3a, 3b dargestellt ist.

Das Prinzip des Transports der Hydraulikflüssigkeit durch eine Vorkammer gemäß Fig. 1a wird nachfolgend in Verbindung mit Fig. 3a, 3b näher erläutert, welche unterschiedliche Ausbildungen einer derartigen Vorkammer 20 schematisch zeigen.

In Fig. 3a und 3b sind Vorkammern 20 dargestellt, welche in Strömungsrichtung zunächst vorzugsweise rotationssymmetrisch divergent und darauffolgend vorzugsweise rotationssymmetrisch konvergent ausgebildet sind.

Bei einer divergenten Ausbildung der Vorkammer 20 ergibt sich eine Diffusorwirkung. Wie in Fig. 3b dargestellt ist, ergibt sich zunächst ein divergenter und daraufhin ein konvergenter Fluß und daraus im Ergebnis ein Strömungsprofil mit nicht verschwindender Differenzbildung, wie es in Fig. 3a und 3b links schematisch dargestellt ist. Dabei ist es ohne Bedeutung, ob die Strömung laminar, wie in Fig. 3a dargestellt, oder sich bei stärkeren Öffnungswinkeln des divergenten Bereichs von der Wand ablöst (3b) oder turbulent strömt (nicht dargestellt). Bei weiterem Vergrößern des Öffnungswinkels kann sich das Maximum des Strömungsprofils auch an eine Wand der Vorkammer 20 anlehnen, sich also nicht vollständig von der Wand ablösen. Dieser Zustand ist jedoch nicht stabil. Der Strahl der Hydraulikflüssigkeit pendelt in diesem Falle vielmehr von einer Wand zur anderen Wand hin und her.

In jedem Falle tritt aber ein Transport der Hydraulikflüssigkeit und unter Umständen zusätzlich eine Verwirbelung durch Turbulenzen ein.

Zum Transport der Hydraulikflüssigkeit ergibt sich durch Verwendung einer Vorkammer ein zusätzlicher Effekt: Das Volumen der Vorkammer 20 ist in etwa vergleichbar mit dem Volumen des Bremsschlauchs oder des Bremsleitungsrohrs 30. Auf diese Weise steht die doppelte Menge Bremsflüssigkeit bei gleicher Schlauchoberfläche, d.h. bei gleichem Wassereintrag pro Zeiteinheit zur Verfügung. Das Mehrvolumen ist dabei im Vergleich zur Gesamtmenge des Bremsflüssigkeitskreislaufs der Bremsvorrichtung, welche neben den Radzylindern und den Bremsleitungen den Hauptbremszylinder und das Vorratsgefäß (nicht dargestellt) umfaßt, zu vernachlässigen. Bei einem Bremsvorgang verschiebt sich die Bremsflüssigkeitssäule geringfügig (um etwa 200 mm) und vermischt sich so mit der Flüssigkeit in der Vorkammer. Hierdurch wird der kritische Wassergehalt, d.h. die kritische Siedepunktserniedrigung erst nach der doppelten Zeit erreicht, so daß auch der Wartungszeitraum bis zu einer Neubefüllung entsprechend verlängert wird. Selbst wenn das Volumen der Vorkammer 20 mit den Diffusoren nicht der vollständigen Aufnahme der Bremsflüssigkeitssäule im Bremsschlauch 30 entspricht, wird durch die beschriebene Anordnung der Vorkammer 20 gerade der Teil der Bremsflüssigkeit, der sich in der Nähe der Bremsscheibe befindet und daher hohen Temperaturen ausgesetzt ist, durchmischt. Insoweit wird in jedem Falle eine Durchmischung der Bremsflüssigkeit im kritischen Bereich, d.h. nahe der Bremsscheibe erzielt.

Es versteht sich, daß die geometrische Form der Vorkammer, d.h. ihr Strömungswiderstand, ihre Befüllbarkeit und Effizienz hinsichtlich des Transports der Bremsflüssigkeit (siehe Fig. 1b) oder Verwirbelung der Bremsflüssigkeit dahingehend optimiert werden, daß bei einem Entspannungsvorgang der Radbremszylinder eine besonders optimale nicht verschwindende Differenzbildung der Strömungsprofile bzw. eine Verwirbelung durch Turbulenzen der Bremsflüssigkeit stattfindet. Die Vorkammer 20 wird vorteilhafterweise nicht nur im Hinblick auf einen optimalen Fluß, sondern auch hinsichtlich ihrer Befüllbarkeit optimiert. Wie in Fig. 1b dargestellt ist, kann die Vorkammer 20 so asymmetrisch ausgebildet sein, daß sie in Strömungsrichtung keine Hinterschnitte aufweist und so nicht als Hohlraum wirkt, in dem beim Befüllen Luftblasen oder dergleichen entstehen oder in dem sich beim Entleeren Hydraulikflüssigkeit sammeln können.

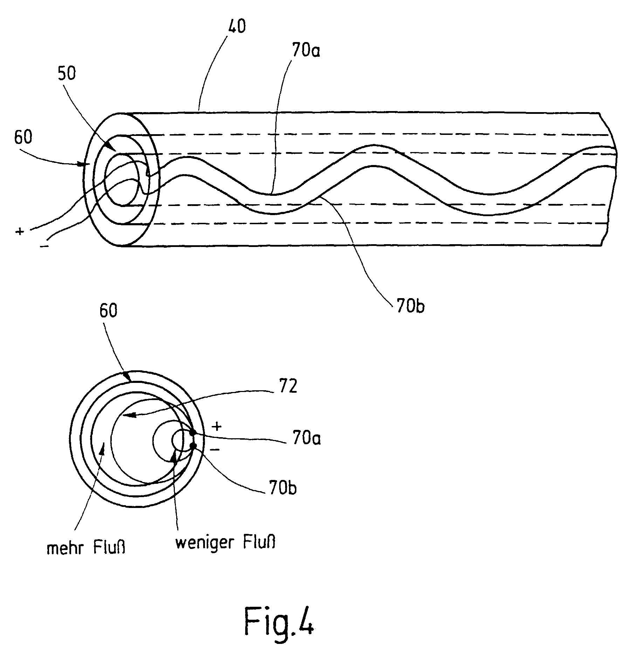

Andere Ausführungsformen einer Einrichtung zur Verwirbelung sind in Fig. 4, Fig. 5 und Fig. 6 dargestellt.

Wie in Fig. 4 dargestellt, ist in einem Bremsschlauch 40 mit kreisrundem Querschnitt eine Seele in Form eines Elastomer-Innenschlauchs 50 vorgesehen. Zwischen dem Elastomer-Innenschlauch 50, der Seele und dem Bremsschlauch 40, der in Form eines Elastomer-Außenschlauchs oder einer Decke ausgebildet ist, sind mehrere Textilgeflechteinlagen 60 angeordnet, um die Druckfestigkeit zu gewährleisten. In diesen Textilgeflechteinlagen 60 sind nun zwei isolierte Leiter 70 asymmetrisch angeordnet. An diese Leiter 70 wird eine Potentialdifferenz angelegt, um auf diese Weise ein inhomogenes elektrisches Feld zu erzeugen, dessen Feldlinien 72 in der Schnittdarstellung in Fig. 4 schematisch dargestellt sind. Das inhomogene elektrische Feld dient der Ankopplung der Bremsflüssigkeit, die auf Polyglykoletherbasis besteht und insoweit eine polarisierbare Materie mit einer Dielektrizitätkonstanten ε >1 darstellt. Immer, wenn das inhomogene elektrische Feld in einer Flußrichtung eingeschaltet ist, d.h. wenn die beiden Leiter 70a und 70b mit einer Potentialdifferenz beaufschlagt sind, findet eine nicht verschwindende Differenzbildung der Strömungsprofile und gegebenenfalls zusätzlich eine Verwirbelung durch Turbulenzen der mit einem Dipolmoment ankoppelnden Bremsflüssigkeit und hierdurch eine Vermischung der Bremsflüssigkeit statt. Das elektrische Feld wird dabei vorzugsweise immer bei einem Entspannungsvorgang der Radbremszylinder eingeschaltet, d.h. bei einer Rückströmung der Bremsflüssigkeit aus den Radbremszylindern.

Auf diese Weise ergeben sich je nach Auslegung unterschiedliche Fließprofile bei einem Hin- und Rückfluß zu bzw. von den Radbremszylindern bei jedem Bremsvorgang und gegebenenfalls eine zusätzliche Verwirbelung beim Rückfluß.

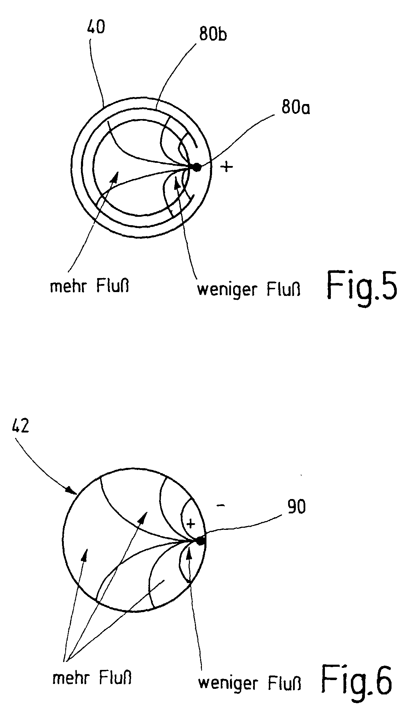

Eine andere Ausführungsform ist in Fig. 5 dargestellt. Diese Ausführungsform unterscheidet sich von der in Fig. 4 dargestellten dadurch, daß einer der beiden Drähte 80b als ein Geflecht ausgebildet ist, der im Inneren des Bremsschlauchs 40 angeordnet ist und einem weiteren Draht 80a gegenüberliegt. Durch diese flächige Ausbildung eines der beiden Leiter kann ebenfalls ein inhomogenes Feld erzeugt werden, wie in Fig. 5 schematisch dargestellt ist.

In Fig. 6 ist schließlich ein Bremsleitungsrohr 42 mit kreisrundem Querschnitt dargestellt, welches selbst einen der beiden Leiter darstellt. In dem Bremsleitungsrohr 42 ist ein weiterer Leiter 90 angeordnet. Der Leiter 90 und das Bremsleitungsrohr 42 werden mit einer Potentialdifferenz beaufschlagt, so daß im Inneren des Bremsleitungsrohrs 42 ein inhomogenes Feld entsteht, wie es schematisch in Fig. 4 dargestellt ist. Dabei sind wie bei dem in Verbindung mit Fig. 5 und Fig. 4 beschriebenen Ausführungsform benachbart zu den Leitern Gebiete mit geringerem Fluß und von den Leitern weiter entfernt Gebiete mit größerem Fluß vorhanden. Auch hierbei kann durch variation der Verlegung der Leiter der Effekt optimiert werden.

## Patentansprüche

1. Bremsvorrichtung für Fahrzeuge umfassend einen Hauptbremszylinder und mit diesem über Bremsleitungen (30) verbundene Radbremszylinder (10), eine Hydraulikflüssigkeit, mittels der die Radbremszylinder (10) durch Betätigen des Hauptbremszylinders mit Druck beaufschlagbar sind, gekennzeichnet durch wenigstens eine vorzugsweise benachbart zu den Radbremszylindern (10) angeordnete Einrichtung (20; 70a, 70b; 80a, 80b; 42, 90) zur nicht verschwindenden Differenzbildung der Strömungsprofile der Hin- und Rückströmung der Hydraulikflüssigkeit zur Ausbildung eines Transports der Hydraulikflüssigkeit.

2. Bremsvorrichtung nach Anspruch 1, dadurch gekennzeichnet, daß die Einrichtung zur nicht verschwindenden Differenzbildung der Strömungsprofile eine den Radbremszylindern (10) zugeordnete Vorkammer (20), die eine in Strömungsrichtung und/oder senkrecht zur Strömungsrichtung angeordnete Unsymmetrie aufweist.

3. Bremsvorrichtung nach Anspruch 2, dadurch gekennzeichnet, daß die Vorkammer (20) in Strömungsrichtung zunächst divergent und darauffolgend konvergent oder vice versa ausgebildet ist.

4. Bremsvorrichtung nach Anspruch 2, dadurch gekennzeichnet, daß die Vorkammer (20) so unsymmetrisch ausgebildet ist, daß sie in Strömungsrichtung keine Hinterschnitte aufweist.

5. Bremsvorrichtung nach Anspruch 1, dadurch gekennzeichnet, daß die Einrichtung zur nicht verschwindenden Differenzbildung der Strömungsprofile wenigstens zwei im Mantel eines Bremsschlauchs (50) angeordnete elektrische Leiter (70a, 70b; 80a, 80b) sind, die während des Entspannungsvorgangs der Radbremszylinder zur Erzeugung eines inhomogenen elektrischen Felds im Inneren des Bremsschlauchs (50) mit einer Potentialdifferenz beaufschlagbar sind.

6. Bremsvorrichtung nach Anspruch 1, dadurch gekennzeichnet, daß die Einrichtung zur nicht verschwindenden Differenzbildung der Strömungsprofile ein im Inneren eines Bremsleitungsrohrs (42) angeordneter Draht (90) ist, der relativ zu dem Bremsleitungsrohr (42) während der Entspannungsvorgänge der Radbremszylinder mit einer Potentialdifferenz beaufschlagbar ist.

7. Bremsvorrichtung nach Anspruch 5 oder 6, dadurch gekennzeichnet, daß der Bremsschlauch (50) bzw. das Bremsleitungsrohr (42) einen kreisrunden Querschnitt aufweisen.
